# EUROPEAN PATENT APPLICATION

(11) **EP 1 491 588 A1**
(43) Date of publication of application: **29.12.2004**
(21) Application number: 03712961.6
(22) Date of filing: 26.03.2003
(51) Int. Cl.: C08L 81/02, C08L 71/12, C08K 3/00, C08K 5/00, C08K 7/02, C08L 101/00, G02B 1/04

(54) **RESIN COMPOSITION FOR OPTICAL PARTS AND OPTICAL PARTS**

(30) Priority: 29.03.2002 JP 2002097902
(71) Applicant: IDEMITSU PETROCHEMICAL CO., LTD., Tokyo 130-0015 (JP)
(72) Inventor: OKUYAMA, Kazuhiro, Ichihara-shi, Chiba 299-0107 (JP)
(74) Representative: Gille Hrabal Struck Neidlein Prop Roos
(86) International application number: PCT/JP2003/003677
(87) International publication number: WO 2003/082982

(57) **Abstract**

A resin composition for an optical part, which contains (A) a polyarylene sulfide, (B) a modified polyphenylene ether, (C) a non-fibrous filler and (D) a fibrous filler, and which may further contain (E) a non-crystalline resin having a glass transition temperature of 180°C or higher and/or (F) a coupling agent. The optical axis deviation of optical parts such as an optical pickup, an optical housing, etc., formed by molding this resin composition for an optical part is small, so that they can be used in laser-applied OA machines, and the like.

## Description

### Technical Field

The present invention relates to a resin composition for an optical part and an optical part. More specifically, it relates to a resin composition for optical parts for use in laser-applied OA machines and optical parts.

### Technical Background

Conventionally, optical parts such as optical pickups for CD and DVD and optical housings (bases) for high-speed color copying machines and high-speed color laser beam printers (LBP) are produced by die-casting of a metal such as aluminum, zinc, or the like. In recent years, however, as the cost cutting and weight saving of products are increasingly needed, studies have been and are made of replacement thereof with resins, and they are being gradually replaced with resins. In this case, resin materials are required to have properties such as dimensional accuracy and dimensional stability during (injection) molding, moldability (flowability), mechanical strength, rigidity, durability against environments (heat, humidity, chemicals, etc.) and flame retardancy depending upon functions of each of optical parts. Optical parts whose materials have been replaced with resins have come to be severely required to satisfy dimensional stability among these properties, particularly, minimization of optical axis deviation of an optical system against a change in environments (temperature, humidity, etc.) in order to cope with higher recording densities or higher speed processing of CD, DVD, etc., or higher-speed colorization of copying machines, LBP, and the like, as has been conspicuous in recent years.

Further, the above optical pickups and housings of optical systems are constituted of many optical parts such as a laser diode, a half mirror, a photo-detector, etc., and an adhesive is used during assembling of these. In these parts, therefore, the adhesion between a resin base and the adhesive is required to be stable under high temperature and high humidity.

Japanese Patent Application 2001-159950 proposes that the volume of fibrous components such as glass fibers (GF), etc., to be incorporated into a resin composition for an optical part be limited (3 to 25 % by volume) so that anisotropy such as linear expansion caused by these is decreased for improving the resin composition in optical axis property. As far as a resin composition of which the fibrous component is limited as above is concerned, particularly, as far as a resin composition of which the glass fiber content is limited to 20 % by volume or less is concerned, the optical axis deviation of an optical part is decreased, however, it cannot be said that the mechanical strength thereof is sufficient, so that it has been required to make a further improvement in such.

Further, since the above resin composition contains, as a resin component, a polymer alloy containing polyarylene sulfide that is poor in adhesion, an optical part obtained therefrom requires a further improvement in adhesion.

Further, the above resin composition has a problem that when a polyarylene sulfide-polyphenylene ether (PPE) alloy is employed as a resin component, phase separation is liable to take place to degrade the surface gloss of an optical part.

Under the circumstances, it is an object of the present invention to provide a resin composition for an optical part, which makes the optical axis deviation very small and which is excellent in mechanical strength, adhesion and moldability (flowability), and an optical part.

The present inventors have made diligent studies and as a result have found that a composition containing polyarylene sulfide and a modified polyphenylene ether as resin components can overcome the above problems, and the present invention has been accordingly completed.

### Disclosure of the Invention

According to a first aspect of the present invention, there is provided a resin composition for an optical part, which comprises (A) polyarylene sulfide, (B) a modified polyphenylene ether, (C) a non-fibrous filler and (D) a fibrous filler.

The resin composition for an optical part, provided by the present invention, may further contain (E) a non-crystalline resin having a glass transition temperature of 180°C or higher and/or (F) a coupling agent.

In the resin composition for an optical part, provided by the present invention, preferably, the total of volume percentages of the polyarylene sulfide (A) and the modified polyphenylene ether (B) is 30 to 70 % by volume, the weight ratio of polyarylene sulfide (A)/modified polyphenylene ether (B) is from 65/35 to 97/3, and the volume percentage of the fibrous filler (D) is 0 to 25 % by volume.

Further, in the resin composition for an optical part, provided by the present invention, preferably, the total of volume percentages of the polyarylene sulfide (A), the modified polyphenylene ether (B) and the non-crystalline resin (E) is 30 to 70 % by volume, the weight ratio of polyarylene sulfide (A)/(modified polyphenylene ether (B) and the non-crystalline resin (E)) is from 65/35 to 97/3, and the volume percentage of the fibrous filler (D) is 0 to 25 % by volume.

The content of the coupling agent (F) is preferably 0 to 3.0 % by weight.

The volume percentage of the modified polyphenylene ether (B) is preferably 0.1 to 25 % by volume.

The modified polyphenylene ether (B) is preferably a fumaric-acid-modified polyphenylene ether or maleic-acid-modified polyphenylene ether.

The non-crystalline resin (E) preferably represents one or at least two resins selected from the group consisting of polyphenylene ether, polysulfone, polyether sulfone, polyetherimide and polyallylate.

According to a second aspect of the present invention, there is provided an optical part produced by molding the above resin composition for an optical part.

### Brief Description of Drawings

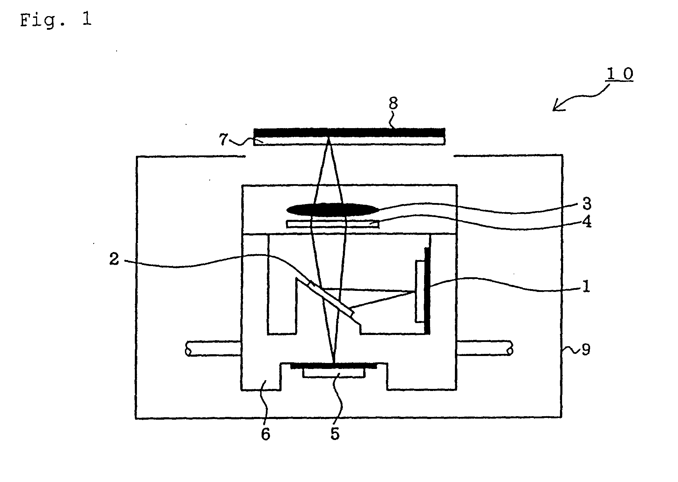

Fig. 1 is a schematic drawing of an optical pickup device fitted with an optical pickup base formed of the resin composition for an optical part, provided by the present invention.

### Best Modes for Carrying Out the Invention

The resin composition for an optical part, provided by the present invention, will be explained hereinafter.

The resin composition for an optical part, provided by the present invention, comprises (A) polyarylene sulfide, (B) a modified polyphenylene ether, (C) a non-fibrous filler and (D) a fibrous filler.

As the polyarylene sulfide (A), there can be used a polymer containing at least 70 mol% of recurring units represented by [-Ar-S-] in which Ar is an arylene group. When the content of the above recurring units is less than 70 mol%, the heat resistance and mechanical strength are sometimes insufficient. Examples of the arylene group include a phenylene group, a biphenylene group and various naphthylene groups, and a phenylene group is preferred. As polyarylene sulfide whose arylene group is a phenylene group (polyphenylene sulfide), for example, a polymer having at least 70 mol% of recurring units represented by the following general formula (1) is included as a preferred example. 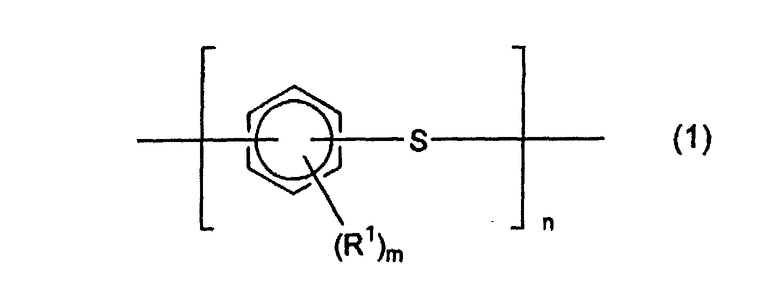 wherein R¹ is a halogen atom, an alkyl group having 1 to 6 carbon atoms, an alkoxy group having 1 to 6 carbon atoms, a phenyl group, a carboxyl group, an amino group or a nitro group, m is an integer of 0 to 4, and n represents an average polymerization degree and is a natural number of 10 or more.

The alkyl group having 1 to 6 carbon atoms includes methyl, ethyl and various types of propyl, butyl, pentyl and hexyl. The alkoxy group having 1 to 6 carbon atoms includes methoxy, ethoxy and various types of propoxy, butoxy, pentyloxy and hexyloxy.

Further, while the polyphenylene sulfide is preferably a polymer containing p-phenylene sulfide units as a basic recurring unit, it may be a polymer that further contains recurring units such as m-phenylene sulfide unit, o-phenylene sulfide unit, p,p'-diphenylene ketone-sulfide unit, p,p'-diphenylene sulfone-sulfide unit, p,p'-biphenylene-sulfide unit, p,p'-diphenylene ether-sulfide unit, p,p'-diphenylene methylene-sulfide unit, p,p'-diphenylene cumenyl-sulfide unit and various naphthyl-sulfide units.

The polyarylene sulfide (A) can be selected from those which are produced by a method in which a general dihalogeno-aromatic compound and a sulfur source are subjected to polycondensation in an organic polar solvent. Concerning the form of the polymer chain thereof, the polymer may be substantially linear without any branched structure or any crosslinked structure, or it may have a branched structure or a crosslinked structure introduced by adding a small amount of a monomer having three or more functional groups at some time during the production thereof.

Preferably, the polyarylene sulfide (A) has a melt viscosity of 50 to 350 poise at a resin temperature of 300°C at a shear rate of 1,000 sec⁻¹. When the melt viscosity is less than 50 poise, the mechanical strength of an optical part is sometimes low. When it exceeds 350 poise, the flowability of the resin composition during molding decreases, so that an optical part comes to have low dimensional accuracy, and that the optical axis deviation of an optical system is sometimes large. The melt viscosity is more preferably 50 to 300 poise, still more preferably 50 to 250 poise.

In the present invention, there may be used a blend of two or more polyarylene sulfides (A) having different melt viscosities. For example, when a blend of polyarylene sulfides having melt viscosities of 100 poise and 2,000 poise is used, an optical part can be improved in weld strength.

The modified polyphenylene ether (B) is a polyphenylene ether modified with at least one functional group, and it has a main structural unit of the following general formula (2). When the modified polyphenylene ether (B) is incorporated into the resin composition, an optical part can be improved in mechanical strength, adhesion, moldability (flowability) and appearance (gloss). 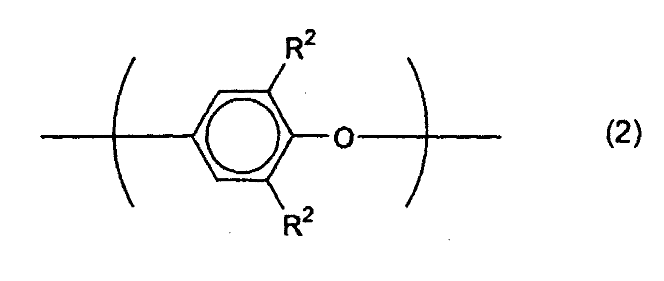 wherein R² is independently a hydrocarbon group having 1 to 4 carbon atoms or a substituent containing at least one member of an oxygen atom, a nitrogen atom and a silicon atom.

Specific examples of R² include methyl, ethyl, n-propyl, isopropyl, n-butyl, isobutyl and tert-butyl, while methyl is preferred.

Examples of the substituent containing at least one member of an oxygen atom, a nitrogen atom and a silicon atom include alkoxy groups such as methoxy, ethoxy and propoxy, dialkylamino groups such as dimethylamino, diethylamino, methylethylamino and dipropylamino, and trialkoxysilyl groups such as trimethoxysilyl and triethoxysilyl. Of these, dimethylamino, diethylamino, trimethoxysilyl and triethoxysilyl are preferred.

Specific examples of the functional group contained in the modified polyphenylene ether (B) include a hydroxyl group, a carboxyl group (fumaric acid, maleic acid, etc.), a dicarboxylic acid anhydride group (anhydrous maleic acid, anhydrous itaconic acid, anhydrous phthalic acid, etc.), an epoxy group, an amino group and an oxazoline group. Of these, a carboxyl group and a dicarboxylic acid anhydride group are preferred.

Examples of the modified polyphenylene ether (B) include fumaric-acid-modified polyphenylene ether, maleic-acid-modified polyphenylene ether, anhydrous-maleic-acid-modified polyphenylene ether and epoxy-group-containing-compound-modified polyphenylene ether. Of these, fumaric-acid-modified polyphenylene ether and maleic-acid-modified polyphenylene ether are preferred.

The modified polyphenylene ether (B) can be selected, for example, from those prepared by a method described in Japanese Patent Application No. 2001-228978.

Examples of the non-fibrous filler (C) include silicates such as sericite, kaolin, mica, clay, bentonite, talc and alumina silicate, metal compounds such as alumina, silicon oxide, magnesium oxide, zirconium oxide, titanium oxide and iron oxide, carbonates such as calcium carbonate, magnesium carbonate and dolomite, sulfates such as calcium sulfate and barium sulfate, glass beads, ceramic beads, boron nitride, silicon carbonate, calcium phosphate, silica, graphite and carbon black. Of these, calcium carbonate, carbon black and silica are preferred, since they are excellent in the properties of decreasing the linear expansion and anisotropy of the resin composition.

The above non-fibrous filler (C) can be selected from those which are generally incorporated for reinforcing resins. When these non-fibrous fillers (C) are incorporated into the resin composition, preferably, they are pretreated with a coupling agent (F) to be described later, such as a silane coupling agent or a titanate coupling agent, so that the resin composition to be obtained is improved in mechanical strength.

Examples of the fibrous filler (D) include a glass fiber, a carbon fiber, an alumina fiber, a silicon carbide fiber, a ceramic fiber, an asbestos fiber, a gypsum fiber, a metal fiber, a whisker-shaped filler (e.g., zinc oxide, potassium titanate, wollastonite, aluminum, etc.), a calcium carbonate whisker and asbestos. Of these, a glass fiber, a carbon fiber and a whisker-shaped filler are particularly preferred. The glass fiber preferably has a fiber diameter of 5 to 20 µm, and when the whisker-shaped filler is used, a zinc oxide whisker is particularly preferred.

Preferably, the resin composition of the present invention contains no fibrous filler (D) for preventing anisotropy that causes optical axis deviation. However, for maintaining mechanical strength (tensile strength, flexural strength, impact strength and elastic modulus), preferably, it is incorporated in a necessary minimum amount as will be described later.

The resin composition for an optical part, provided by the present invention, may further contain a non-crystalline resin (E) having a glass transition temperature of 180°C or higher. When a resin having a glass transition temperature of less than 180°C is used, undesirably, an optical part obtained from the resin composition by injection molding may be sometimes deformed during its release from a mold. More preferably, the glass transition temperature of the non-crystalline resin (E) is not higher than 280°C which is the melting point of the polyarylene sulfide (A), since melting and kneading are made easier when the resin composition is prepared.

The crystallinity of the non-crystalline resin (E) is preferably less than 20 %, more preferably less than 10 %. A non-crystalline resin having a crystallinity of over 20 % comes to have a large difference between a volume that it has when melted and a volume that it has when solidified to have a large coefficient of contraction, so that the dimensional accuracy of an optical part formed of a resin composition containing such a resin is sometimes decreased.

Further, preferably, the melt viscosity that the non-crystalline resin (E) has when the resin composition is molded is nearly equivalent to the melt viscosity of the polyarylene sulfide (A), since such a non-crystalline resin is excellent in dispersibility.

Examples of the non-crystalline resin (E) include polyphenylene ether (PPE), polysulfone (PSU), polyethersulfone (PES), polyetherimide (PEI) and polyacrylate (PAR). Of these, polyphenylene ether and polysulfone are more preferred.

Further, the resin composition for an optical part, provided by the present invention, may further contain a coupling agent (F) as an agent for improving mechanical strength and promoting adhesion.

Examples of the coupling agent (F) include an isocyanate compound, an organosilane compound, an organotitanate compound, an organoborane compound and an epoxy compound.

These coupling agents (F) preferably have, as reactive functional groups, an epoxy group, a mercapto group, ureido group, an isocyanato group, an amino group, a hydroxyl group and a vinyl group.

Of these coupling agents (F), an organosilane compound is particularly preferred. Specific examples thereof include epoxy-group-containing alkoxysilane compounds such as γ-glycidoxypropyltrimethoxysilane, γ-glycidoxypropyltriethoxyislane and β-(3,4-epoxycyclohexyl)ethyltrimethoxysilane, mercapto-group-containing alkoxysilane compounds such as γ-mercaptopropyltrimethoxysilane and γ-mercaptopropyltriethoxysilane, ureido-group-containing alkoxysilane compounds such as γ-ureidopropyltrimethoxysilane, γ-ureidopropyltriethoxysilane and γ-(2-ureidoethyl)aminopropyltrimethoxysilane, isocyanato-group-containing alkoxysilane compounds such as γ-isocyanatopropyltrimethoxysilane, γ-isocyanatopropyltriethoxysilane, γ-isocyanatopropylmethyldimethoxysilane, γ-isocyanatopropylmethyldiethoxysilane, γ-isocyanatopropylethyldimethoxysilane, γ-isocyanatopropylethyldiethoxysilane and γ-isocyanatopropyltrichlorosilane, amino-group-containing alkoxysilane compounds such as γ-(2-aminoethyl)aminopropylmethyldimethoxysilane, γ-(2-aminoethyl)aminopropyltrimethoxysilane and γ-aminopropyltrimethoxysilane, hydroxyl-group-containing alkoxysilane compounds such as γ-hydroxypropyltrimethoxysilane and γ-hydroxypropyltriethoxysilane and vinyl-group-containing alkoxysilane compounds such as γ-methacryloxypropyltrimethoxysilane, vinyltrimethoxysilane and N-β-(N-vinylbenzylaminoethyl)-γ-aminopropyltrimethoxysilane·hydrochloride. Of these, γ-glycidoxypropyltrimethoxysilane is preferred.

In the resin composition of the present invention, the total of volume percentages of the resin components (polyarylene sulfide (A) and modified polyphenylene ether (B), or polyarylene sulfide (A), modified polyphenylene ether (B) and non-crystalline resin (E)) is preferably 30 to 70 % by volume, more preferably 30 to 50 % by volume. When the total of the volume percentages is less than 30 % by volume, the flowability suitable for molding the resin composition sometimes cannot be secured. When it exceeds 70 % by volume, the optical axis deviation of an optical part obtained by molding the resin composition is sometimes large.

Further, the weight ratio of the polyarylene sulfide (A)/the modified polyphenylene ether (B) or the weight ratio of the polyarylene sulfide (A)/(the modified polyphenylene ether (B) and the non-crystalline resin (E)) is preferably 65/35 to 97/3, more preferably 65/35 to 85/15. When the content of the polyarylene sulfide (A) is less than 65 % by weight, the flowability of the resin composition is sometimes decreased. When it exceeds 97 % by weight, the optical axis deviation of an optical part obtained by molding the resin composition is sometimes large.

The volume percentage of the modified polyphenylene ether (B) is preferably 0.1 to 25 % by volume, more preferably 1.0 to 4.0 % by volume. When the volume percentage is less than 0.1 % by volume, the mechanical strength and adhesion are sometimes decreased. When it exceeds 25 % by volume, the moldability is sometimes decreased.

The total of volume percentages of the filler component (non-fibrous filler (C) and fibrous filler (D)) is preferably 70 to 30 % by volume. In this case, the volume percentage of the fibrous filler (D) is preferably 0 to 25 % by volume, more preferably 3 to 25 % by volume. When the volume percentage exceeds 25 % by volume, the optical axis deviation of an optical part obtained by molding the resin composition is sometimes large.

Further, the content of the coupling agent (F) is preferably 0 to 3.0 % by weight, more preferably 0.1 to 0.5 % by weight. When the content exceeds 3.0 % by weight, the flowability decreases, which may sometimes cause a problem during injection molding.

In the present invention, the compositional ratios of the above resin component and filler component are defined by volume percentages. That is because the compositional ratios of these two components and the optical axis deviation of an optical part obtained by molding the resin composition are highly correlated not with the weight ratios of these two components but with the volume percentages. In the present invention, the volume percentages have been calculated by dividing the mass of each of the resin components and the filler components with the density thereof in atmospheric pressure at 25°C.

In the optical axis deviation of an optical part, for example, members constituting an optical pickup module or an optical housing are deviated in positional relationship on the basis of the absolute value of thermal expansion of each member or the anisotropy thereof depending upon changes in temperature, and the deviation appears as an optical axis deviation of laser. For controlling the optical axis deviation of an optical part, it is therefore important to decrease the absolute value of thermal expansion of each member constituting an optical housing and the anisotropy thereof.

From the above viewpoint, therefore, it is important to select a type of the fibrous filler (D) and an incorporation amount thereof. For example, a resin composition containing a glass fiber has a relatively small anisotropy in linear expansion, so that there can be formed a resin composition for an optical part, which is excellent in mechanical strength, by increasing the incorporation amount thereof. A resin composition containing a carbon fiber has a relatively large anisotropy in linear expansion, so that the incorporation amount of the carbon fiber is preferably limited to 15 % by volume or less for controlling an increase in the optical axis deviation of an optical part obtained. A carbon fiber is highly effective for improving the physical properties, particularly, rigidity, of the resin composition. Even if the incorporation amount thereof in the resin composition is decreased for controlling the optical axis deviation, therefore, there can be obtained an optical part having mechanical strength fully excellent in practical use. The incorporation amount of the fibrous filler (D) is thus determined as required depending upon the properties thereof, whereby the incorporation amount of the non-fibrous filler (C) can be determined on the basis of a difference between the incorporation amount of the filler component and the incorporation amount of the fibrous filler (D).

The resin composition for an optical part, provided by the present invention, may further contain antioxidants and thermal stabilizers such as hindered phenol, hydroquinone and phosphite, ultraviolet absorbers such as resorcinol, salicylate, benzotriazole and benzophenone and various additives such as an antistatic agent, a flame retardant, a crystallization nucleating agent, a dissociating agent, a pigment, a mold release agent, a slidability-imparting agent and an adhesion-improving agent, as required so long as the effect of the present invention is not impaired.

The resin composition for an optical part, provided by the present invention, can be prepared as a homogenous composition by melt-kneading the above components with a general mixer or kneading machine.

The optical part formed of a resin composition, provided by the present invention, can be formed from the above resin composition by known injection molding, extrusion, solvent-molding, press-molding or thermoforming. Of these molding or forming methods, injection molding is preferred since it is excellent in productivity and dimensional accuracy of the optical part.

The optical part of the present invention is formed of the above resin composition, so that the optical axis deviation of a laser can be sufficiently controlled so as to be within a tolerance limit even when it is required to use the optical part at a higher ambient temperature than a conventional one, for example, at an ambient temperature of approximately 70°C to 110°C. Further, the optical part of the present invention is excellent in mechanical strength, adhesion and moldability (flowability).

Examples of the optical part of the present invention include an optical pickup for reading and writing data on the recording surface of CD, CD-R, CD-ROM, CD-RW, DVD, DVD-R, DVD-ROM or DVD-RAM, and an optical housing, a chassis and a base for a laser printer (LBP), a copying machine (PPC) and a liquid crystal projector. These are mainly for use in laser-applied OA machines.

### Examples

### Examples 1 - 6 and Comparative Examples 1 - 3

For preparation of resin compositions for optical parts, the following materials were used.

### (A) Polyarylene sulfide

Polyphenylene sulfide (PPS1) (B100, supplied by TOSOH CORPORATION), Crosslinked type, melt viscosity 100 pose (300°C, 1,000 sec⁻¹)

Polyphenylene sulfide (PPS2) (#160, supplied by TOSOH CORPORATION), Crosslinked type, melt viscosity 2,000 pose (300°C, 1,000 sec⁻¹)

### (B) Modified polyphenylene ether

Fumaric-acid-modified polyphenylene ether (FA-PPE) (CX2, supplied by IDEMITSU PETROCHEMICAL CO., Ltd.)

### (C) Non-fibrous filler

Calcium carbonate (Whiten P-30, supplied by SHIRAISHI CALCIUM KAISHA, LTD.)

Carbon black (CB) (#960B, supplied by MITSUBISHI CHEMICAL CORPORATION)

### (D) Fibrous filler

Glass fiber (GF) (JAFT591, diameter 10 µm, supplied by ASAHI FIBER GLASS Co.)

### (E) A non-crystalline resin having a glass transition temperature (Tg) of 180°C or higher

Polyphenylene ether (PPE) (2,6-dimethyl-1,4-phenylene ether, Tg: 220°C, supplied by Mitsubishi Engineering-Plastics Corporation)

Polysulfone (PSU) (UDEL P1700, Tg: 190°C, supplied by Teijin Amoco K.K.)

### (F) Coupling agent

Silane coupling agent (SH6040, supplied by Dow Corning Toray Silicone Co., Ltd.)

The above components were dry-blended in amount ratios (weight ratios) shown in Table 1, and then melt-kneaded at 330°C with a twin-screw extruder (TEM35, supplied by TOSHIBA MACHINE CO., Ltd.) to obtain pellets of a resin composition for an optical part. Table 1 shows volume percentages and weight ratios of the resin composition.

The obtained pellets were molded into an optical pickup base for DVD with a 50-ton injection molding machine (supplied by The Japan Steel Works Ltd.) under conditions of a mold temperature of 140°C and an injection molding temperature of 330°C. A semiconductor laser beam source (LD), a half mirror and a light emission portion (CPD: photodetector) were fixed thereto with a UV-curable adhesive (World Lock 8000 series, supplied by Kyoritsu Chemical & Co, Ltd.). The thus-obtained optical pickup base was fitted into an optical pickup device shown in Fig. 1.

In the above optical pickup device 10, a semiconductor laser beam source (laser diode) 1, a half mirror 2, an objective lens 3 and a light-receiving portion 5 are held in the optical pickup base 6 fitted into a holding case 9. A laser beam outputted from the semiconductor laser beam source 1 is focused on a recording surface 8 of an optical disk 7 with the object lens 3 through the half mirror 2 and a collimator lens 4, and a beam reflected from the recording surface 8 is caused to enter the light receiving portion 5 through the object lens 3, the collimator lens 4 and the half mirror 2, so that data signals and error signals such as a focus error signal are obtained. The optical pickup device has a mechanism in which the positions of the objective lens 3 and the like are adjusted with regard to the error signal. Further, the optical pickup base 6 has a constitution in which the entire surface of the recording surface 8 of the optical disk 7 can be irradiated with the laser beam while the optical pickup base 6 moves within the holding case 9 in conjunction with a shaft.

The above optical pickup base 6 was measured for an optical deviation as follows with a measuring apparatus (not shown) that was provided with a cylindrical oven (not shown) having a diameter of 20 cm and having the capability of controlling temperatures between -40 and 80°C or higher and holding, and with a contact-free angle-measuring mechanism (resolving power: 0.01 minute) for measuring reflection angles of reflected beams of laser.

First, the optical pickup base 6 was set in the oven such that the surface of the half mirror 2 was horizontally positioned. Then, laser beam was emitted from the semiconductor laser beam source 1 at room temperature (23°C), a beam reflected from the half mirror 2 was measured for an angle with an autocollimator, and zero point adjustment was carried out to determine the starting point. Then, the oven was heated to 80°C and maintained for 10 minutes, then, laser beam was again emitted from the beam source 1, and the beam was measured for a reflection angle. In this case, a difference between the reflection angle at 80°C and the reflection angle at room temperature (23°C) was taken as an optical axis deviation (angle, minute). Table 1 shows the results.

Incidentally, it is assumed that the above optical axis deviation takes place since the position of the half mirror 2 is affected and deviated by the influence of thermal linear expansion.

Further, a heat cycle of -30 to 80°C was carried out 20 times, and the above temperature characteristic test (measurement for an optical axis deviation at 80°C) was again carried out. Table 1 shows the results.

In this case, if the adhesion of the optical pickup base 6 is poor, the optical system deviates due to the occurrence of peeling, etc., of the half mirror 2, and as a result, the optical axis deviation comes to be greater.

### Evaluation with actual machine (deviation in position)

A lens actuator (not shown), and the like were incorporated into the optical pickup base 6, and after a heat cycle (between -20 and 80°C) and a drop impact test (1,200 G), actual reading performances were evaluated, and the result was evaluated on the basis of the following ratings.
○: The value of the optical axis deviation was 0.35 or less, and no reading error took place.
X: The value of the optical axis deviation was over 0.35, and a reading error took place.

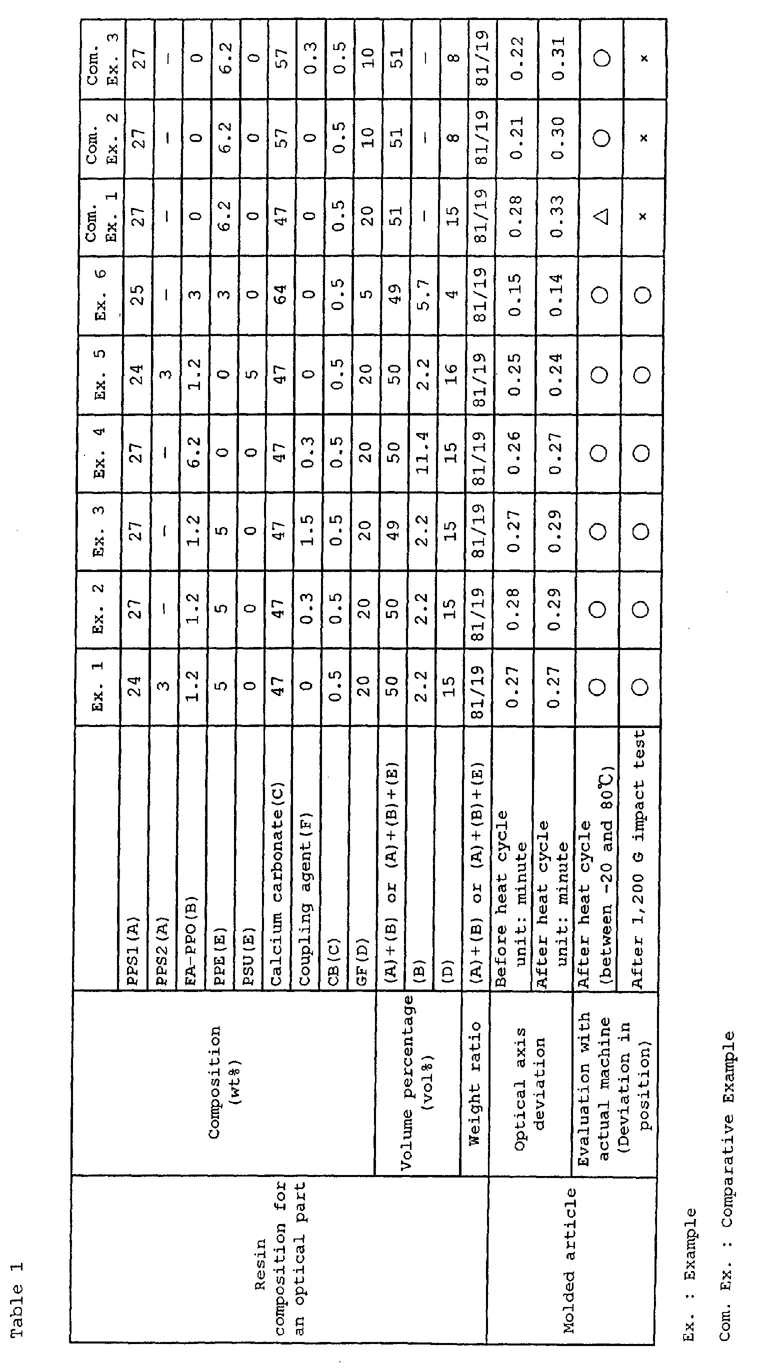

### Industrial Utility

According to the present invention, there can be provided a resin composition for an optical part, which makes optical axis deviation very small and which is excellent in mechanical strength, adhesion and moldability (flowability), and an optical part.

## Claims

1. A resin composition for an optical part, comprising
(A) a polyarylene sulfide,
(B) a modified polyphenylene ether,
(C) a non-fibrous filler, and
(D) a fibrous filler.

2. The resin composition for an optical part as recited in claim 1, which further comprises
(E) a non-crystalline resin having a glass transition temperature of 180°C or higher, and/or
(F) a coupling agent.

3. The resin composition for an optical part as recited in claim 1, wherein the total of volume percentages of said polyarylene sulfide (A) and said modified polyphenylene ether (B) is 30 to 70 % by volume,
the weight ratio of said polyarylene sulfide (A)/said modified polyphenylene ether (B) is 65/35 to 97/3, and
the volume percentage of said fibrous filler (D) is 0 to 25 % by volume.

4. The resin composition for an optical part as recited in claim 2, wherein the total of volume percentages of said polyarylene sulfide (A), said modified polyphenylene ether (B) and said non-crystalline resin (E) is 30 to 70 % by volume,
the weight ratio of said polyarylene sulfide (A)/(said modified polyphenylene ether (B) and said non-crystalline resin (E)) is 65/35 to 97/3, and
the volume percentage of said fibrous filler (D) is 0 to 25 % by volume.

5. The resin composition for an optical part as recited in claim 2, wherein the content of said coupling agent (F) is 0 to 3.0 % by weight.

6. The resin composition for an optical part as recited in claim 1, wherein the volume percentage of said modified polyphenylene ether (B) is 0.1 to 25 % by volume.

7. The resin composition for an optical part as recited in any one of claims 2 and 4 to 6, wherein said non-crystalline resin (E) represents one or at least two resins selected from the group consisting of polyphenylene ether, polysulfone, polyethersulfone, polyetherimide and polyacrylate.

8. The resin composition for an optical part as recited in any one of claims 1 to 6, wherein said modified polyphenylene ether (B) is a fumaric-acid-modified polyphenylene ether or a maleic-acid-modified polyphenylene ether.

9. An optical part formed by molding the resin composition for an optical part as recited in any one of claims 1 to 6.
